# EUROPÄISCHE PATENTSCHRIFT

(11) **EP 2 319 164 B1**
(45) Veröffentlichungstag und Bekanntmachung des Hinweises auf die Patenterteilung: **18.09.2019**
(21) Anmeldenummer: 09780857.0
(22) Anmeldetag: 21.07.2009
(51) Int. Cl.: H02K 29/03, H02K 1/22, H02K 16/02, H02K 1/27, H02K 21/04, H02K 21/16

(54) **ROTOR FÜR EINE ELEKTRISCHE MASCHINE MIT REDUZIERTEM RASTMOMENT**
ROTOR FOR AN ELECTRIC MACHINE WITH A REDUCED COGGING TORQUE
ROTOR POUR UNE MACHINE ÉLECTRIQUE À COUPLE DE DÉTENTE RÉDUIT

(30) Priorität: 27.08.2008 DE 102008041604
(43) Veröffentlichungstag der Anmeldung: 11.05.2011
(73) Patentinhaber: SEG Automotive Germany GmbH, 70499 Stuttgart (DE)
(72) Erfinder: Reutlinger, Kurt, 70174 Stuttgart (DE)
(74) Vertreter: Steinbauer, Florian
(86) Internationale Anmeldenummer: PCT/EP2009/059333
(87) Internationale Veröffentlichungsnummer: WO 2010/023038

(56) Entgegenhaltungen:
- EP-A2- 0 729 217
- EP-A2- 1 447 901
- WO-A2-2004/017496
- FR-A1- 2 780 580
- JP-A- 2000 308 287
- US-A1- 2007 090 713

## Beschreibung

### Stand der Technik

Die Erfindung geht aus von einer elektrischen Maschine, wie
sie in der älteren DE-Patentanmeldung 10 2007 025 971.0 oder der US 2007/09713 A1 oder der FR 2 780 580 A1 beschrieben ist.

Eine derartige hybriderregte Synchronmaschine eignet sich insbesondere für die Speisung des Bordnetzes von Kraftfahrzeugen, wobei sie im Generatorbetrieb mit geregelter induzierter Spannung in einem mehrphasigen Ständerwicklungssystem benutzt und die Pole des Rotors permanentmagnetisch und/oder elektrisch erregt werden.

Die EP 0729217 A2 oder die JP 2000 308287 A zeigt eine Maschine mit einer Ringwicklung zwischen zwei Rotorpaketen für den Läufer und mit um eine ganze Polteilung gegeneinander versetzten Magnetpolen in den beiden Rotorpaketen, so dass in axialer Richtung ein permanentmagnetisch erregter Pol der einen Rotorhälfte mit einem elektrisch erregten Pol der anderen Rotorhälfte fluchtet.

### Offenbarung der Erfindung

Die erfindungsgemäße elektrische Maschine mit den Merkmalen des unabhängigen Anspruchs hat den Vorteil, dass durch die vorgeschlagene Gestaltung des Rotors Drehmomentschwankungen und durch die veränderlichen Kräfte auf die Statorzähne verursachte Geräusche der Maschine deutlich reduziert werden können, wobei gleichzeitig der Vorteil einer einfachen Einbringung der Erregerwicklung in die Nuten des Rotors durch ein direktes Wickelverfahren bei hohem Füllfaktor der Nuten erhalten bleibt. Im Unterschied zu einer rein permanentmagnetisch erregten Maschine mit versetzt angeordneten Teilmagneten, wie sie beispielsweise aus der EP 1 447 901 A2 bekannt ist, ergibt sich durch die Kombination der permanentmagnetischen Erregung mit einer Erregerwicklung der wesentliche Vorteil, dass mit einem verhältnismäßig kleinen, leicht regelbaren Erregerstrom in der Rotorwicklung die Ausgangsleistung der Maschine mit einfachen Mitteln regelbar ist und gleichzeitig die hohe Leistungsdichte einer permanentmagnetisch erregten Maschine genutzt werden kann.

Zur Verringerung der Rastmomente werden hierbei die einer Nutöffnung benachbarten, elektrisch erregten Pole jeweils mit unterschiedlicher Polteilung ausgeführt, während die restlichen, elektrisch oder permanentmagnetisch erregten Pole am Rotorumfang zweckmäßigerweise mit gleicher Polteilung ausgeführt werden. Hierbei wird mit einem einzigen Blechschnitt für die Lamellen des Rotorblechpaketes allein durch eine spiegelsymmetrische Schichtung der Bleche der angestrebte Versatz im Rotorblechpaket bei gleichbleibendem, fluchtenden Nutverlauf erreicht. Mit zwei unterschiedlichen Blechschnitten können auf diese Weise vier gegeneinander versetzte Teilpakete des Rotorblechpaketes, mit drei unterschiedlichen Blechschnitten eine Unterteilung in sechs gegeneinander verdrehte Teilpakete erreicht werden, jeweils bei unverändertem, achsparallelem Nutverlauf.

Durch die in den abhängigen Ansprüchen aufgeführten Maßnahmen sind vorteilhafte Weiterbildungen und Verbesserungen der im unabhängigen Anspruch angegebenen elektrischen Maschine möglich.

Die unterschiedlichen Polteilungen für die an die Nutöffnungen angrenzenden, elektrisch erregten Pole werden hierbei vorteilhafterweise so gewählt, dass die Differenz der Polteilungen kleiner ist als der Abstand zwischen den Raststellungen des Rotors. Die Polteilung der permanentmagnetisch erregten Pole und der zwischen diesen angeordneten, elektrisch erregten Folgepole liegt dabei zweckmäßigerweise im Bereich zwischen den Polteilungen der unterschiedlich breiten, elektrisch erregten Pole an den Nutöffnungen.

Weitere Einzelheiten und Ausgestaltungen der Erfindung ergeben sich aus den Unteransprüchen und der Beschreibung eines Ausführungsbeispiels.

### Kurze Beschreibung der Zeichnungen

Ein Ausführungsbeispiel der Erfindung ist in den Zeichnungen dargestellt und in der nachfolgenden Beschreibung näher erläutert.

Es zeigen
- Figur 1: einen Längsschnitt durch einen Wechselstromgenerator für Kraftfahrzeuge mit einem hybriderregten Rotor in Polwechselanordnung und
- Figuren 2a und 2b: Ansichten von zwei Teilpaketen des Rotorblechpaketes für eine elektrisch zweipolig erregte, insgesamt 14-polige Maschine mit sechs permanentmagnetisch erregten Polen, wobei in den Darstellungen 2a und 2b der Blechschnitt jeweils gleich, die Blechlamellen jedoch gewendet sind.

### Ausführungsformen der Erfindung

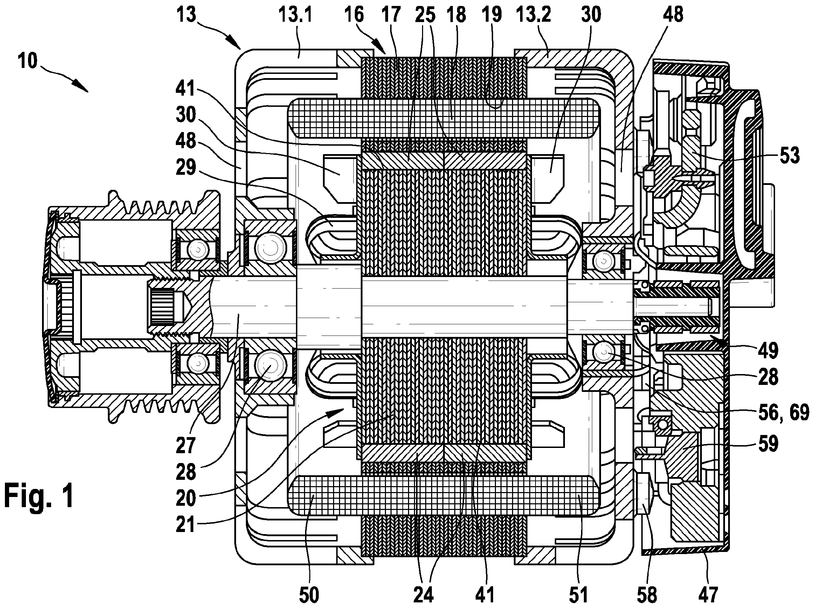

In Figur 1 ist in schematisierter Darstellung ein Schnitt durch eine elektrische Maschine 10 in der Ausführung als Wechselstromgenerator für Kraftfahrzeuge dargestellt. Dieser weist ein zweiteiliges Gehäuse 13 auf, das aus einem ersten Lagerschild 13.1 und einem zweiten Lagerschild 13.2 besteht. Der Lagerschild 13.1 und der Lagerschild 13.2 nehmen einen Stator 16 auf, mit einen kreisringförmigen Statorblechpaket 17, in dessen nach innen offene und sich axial erstreckende Nuten 19 eine Statorwicklung 18 eingelegt ist. Der ringförmige Stator 16 umgibt mit seiner radial nach innen gerichteten Oberfläche einen Rotor 20, der als hybriderregter Rotor ausgebildet ist. Der Stator 16 wirkt hierbei über einen Arbeitsluftspalt mit dem im Stator 16 drehbar gelagerten Rotor 20 zusammen.

Der Rotor 20 weist über seinen Umfang in einer vorgegebenen Folge mehrere Nordpole N und Südpole S auf, die durch geteilte Permanentmagnete 24, 25 sowie durch die Erregerwicklung 29 ausgebildet werden. Dabei lässt sich die Polzahl des Rotors 20 in Abhängigkeit von der Stärke und Richtung eines Erregerstromes in der Erregerwicklung 29 und durch die Zahl der eingesetzten Permanentmagnete verändern.

Der Rotor 20 besitzt einen magnetisch leitfähigen Körper, der als unterteiltes Blechpaket 21 ausgebildet ist. Das Rotorblechpaket ist in Achsrichtung laminiert mit einer Blechstärke zwischen 0,1 mm und 2,0 mm. Unterhalb 0,1 mm ist die Widerstandsfähigkeit des Blechpaketes 21 gegen Fliehkräfte zu gering. Oberhalb von 2,0 mm ist die Verringerung der Wirbelstromverluste auf der Außenfläche des Rotors 20 nicht mehr ausreichend, so dass die eingebauten Permanentmagnete 24, 25 geschädigt, beziehungsweise entmagnetisiert werden können.

Die axiale Länge des Rotorblechpaketes 21 entspricht vorzugsweise der axialen Länge des kreisringförmigen Statorblechpaketes 17, beziehungsweise ist für einen Toleranzausgleich bis zu 2 mm länger oder kürzer als das Statorblechpaket 17 und wird vorzugsweise durch Schweißnähte zusammengehalten. Es können statt Schweißungen auch Nieten, beziehungsweise Knöpfungen eingesetzt werden.

Die Erregerwicklung 29 ist beispielhaft bei der zweipoligen Variante als Durchmesserspule ausgebildet und liegt in Nuten, die aus dem Blechpaket 21 ausgestanzt sind. Die Erregerwicklung 29 kann z.B. als Flyerwicklung (Doppelflyer) direkt in das Rotorblechpaket 21 eingewickelt werden. Des Weiteren sind in dem Rotorblechpaket Bereiche 41 ausgespart, in die Permanentmagnete 24, 25 eingesetzt werden können.

Erfindungsgemäß werden die Magnete 24, 25 vorzugsweise in ausgestanzte Taschen im Rotorblechpaket eingesetzt. Hierdurch ist es möglich, die im Betrieb auftretenden Fliehkräfte aufzunehmen und dadurch einen sicheren Halt der Magnete auf dem Rotor zu gewährleisten. Als Magnetmaterial erweist sich ein Material mit einer Remanenzinduktion von größer 1 T als besonders vorteilhaft. Diese magnetischen Eigenschaften weisen insbesondere Permanentmagnete aus Seltenerd-Material auf. Die Magnete werden hierbei in den Rotor derart eingebaut, dass sie ein im Wesentlichen radiales Feld erzeugen. Dieses Feld tritt dann vom Rotor über den Luftspalt in das Statorblechpaket ein und induziert bei Drehung des Rotors eine Spannung in den Wicklungen des Stators.

Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter30 befestigt ist. Diese Lüfter bestehen im Wesentlichen aus einem plattenförmigen, beziehungsweise scheibenförmigen Abschnitt, von dem Lüfterschaufeln in bekannter Weise ausgehen. Die Lüfter 30 dienen dazu, über Öffnungen 48 in den Lageschilden 13.1 und 13.2 einen Luftaustausch zwischen der Außenseite und dem Innenraum der elektrischen Maschine 10 zu ermöglichen. Dazu sind Öffnungen 48 an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 radial nach außen beschleunigt, so dass sie durch die kühlluftdurchlässigen Wickelköpfe 50 auf der Antriebsseite und 51 auf der Elektronikseite hindurchtreten kann. Durch diesen Effekt werden die Wickelköpfe 50, 51 gekühlt. Die Kühlluft nimmt nach dem Hindurchtreten durch die Wickelköpfe 50, 51, beziehungsweise nach dem Umströmen der Wickelköpfe, einen Weg radial nach außen durch nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 eine Schleifringbaugruppe 49 ab, welche die Erregerwicklung 29 mit Erregerstrom versorgt. Um diese Schleifringbaugruppe 49 herum ist ein Kühlkörper 53 angeordnet, der hier als Pluskühlkörper wirkt, an dem Plusdioden 59 montiert sind. Als sogenannter Minuskühlkörper wirkt der Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und Plusdioden 59 in Form einer Brückenschaltung 69 miteinander verbindet.

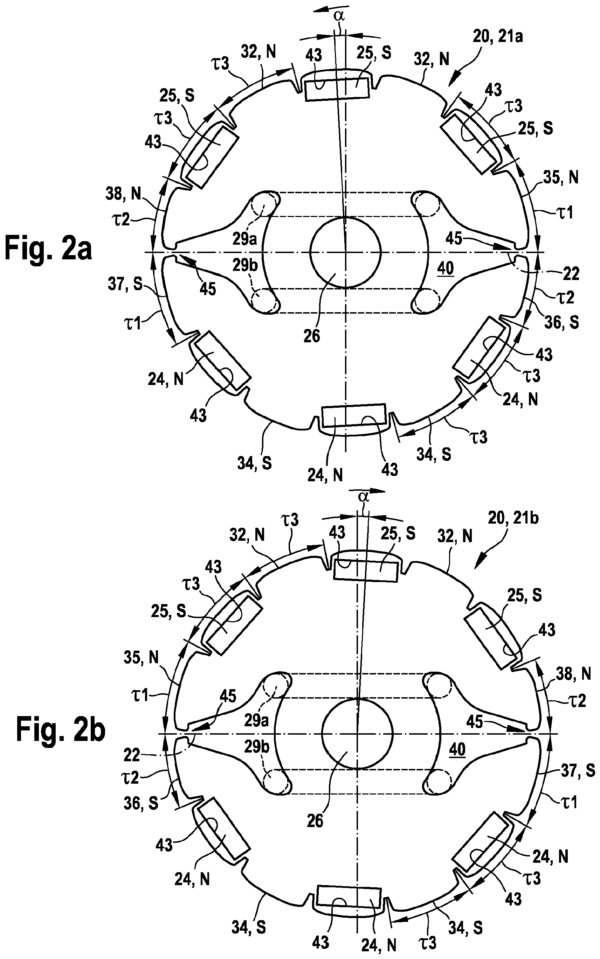

Die Figuren 2a und 2b zeigen jeweils den gleichen, um 180° gedrehten Rotorblechschnitt einer insgesamt 14-poligen elektrischen Maschine 10. Die Darstellungen entsprechen hierbei den Ansichten von zwei Teilpaketen 21a und 21b des Rotorblechpaketes 21, wobei die Polausrichtungen jeweils um den Winkel α gegeneinander verdreht sind bei unveränderter Lage der Nutmittellinie 22.

Der Rotor 20 ist elektrisch zweipolig erregt durch eine Erregerwicklung 29, welche in zwei gleiche, symmetrisch beidseitig einer Öffnung 26 für die nicht dargestellte Rotorwelle angeordnete Teilspulen 29a und 29b unterteilt ist. Die Grunderregung der Maschine erfolgt über insgesamt acht elektrisch erregte Pole, wobei in den Figuren 2a und 2b die vier oberen Pole 32, 35 und 38 Nordpole und die vier unteren Pole 34, 36 und 37 Südpole ausbilden. Zwischen den elektrisch erregten Polen weist der Blechschnitt den Polen 32 und 34 entsprechende Vorsprünge mit taschenförmigen Aussparungen 43 auf zum Einschieben von Permanentmagneten 24 und 25, wobei die Permanentmagnete 24 Nordpole und die Permanentmagnete 25 Südpole am Rotorumfang ausbilden, jeweils im Wechsel mit den elektrisch erregten Polen.

Der Blechschnitt für die Teilpakete 21a und 21b des Rotorblechpaketes in den Figuren 2a und 2b ist gleich, die Lamellen sind jedoch um 180° gedreht. Hierbei bleibt die Form und die Mittellinie 22 der Nuten 40 unverändert erhalten, sodass sich diese fluchtend über die gesamte axiale Länge des Rotors 20 erstrecken, während die Pole 32-38 in den beiden Teilpaketen 21a und 21b auf Grund von unterschiedlichen Polteilungen τ1 und τ2 der Pole 35-38 gegeneinander versetzt sind. In axialer Richtung schließt sich hierbei an einen elektrisch erregten Teilpol mit der Polteilung τ1 ein elektrisch erregter Teilpol mit der Polteilung τ2 an und umgekehrt, wodurch die Permanentmagnetpole 24 und 25 sowie die dazwischen liegenden elektrisch erregten Folgepole 32 und 34 jeweils um einen Winkel α gegeneinander verdreht werden, welcher der unterschiedlichen Größe der Polteilungen τ1 und τ2 entspricht.

Die Größe der Polteilung τ1 für die breiteren Nutrandpole 35 und 37, τ2 für die schmäleren Nutrandpole 36 und 38 und τ3 für die Permanentmagnetpole sowie die dazwischen liegenden elektrisch erregten Folgepole ist so gewählt, dass die Polteilung τ3 im Bereich zwischen der Größe der Polteilungen τ1 und τ2 liegt. Hierbei soll die Differenz τ1-τ2 der Polteilungen τ1 und τ2 der elektrisch erregten Pole 35-38 kleiner oder maximal gleich groß sein wie der Abstand zwischen den Raststellungen des Rotors 20, welcher seinerseits durch die Zahl der Rotorpole und die Zahl der Ständerzähne bestimmt ist. Der Rastabstand ergibt sich hierbei aus dem Quotienten des Rotorumfangs und des kleinsten gemeinsamen Vielfachen zwischen der Zahl der Rotorpole und der Statorzähne. In dem in den Figuren 1 und 2 dargestellten Ausführungsbeispiel besitzt der Stator 42 Zähne, der Rotor 14 Pole. Kleinstes gemeinsames Vielfaches hierbei ist die Zähnezahl 42, sodass der Abstand zwischen den Raststellungen des Rotors 20 in diesem Ausführungsbeispiel 1/42 des Rotorumfangs, beziehungsweise der Luftspaltlänge beträgt.

In fertigungstechnischer und konstruktiver Hinsicht ist es vorteilhaft, wenn das Rotorblechpaket 21 in Achsrichtung wenigstens zwei Teilpakete 21a und 21b und höchstens sechs Teilpakete aufweist. Mit zwei Teilpaketen erreicht man bereits eine deutliche Reduzierung der Drehmomentschwankungen und der Geräusche des Motors, bei mehr als sechs Teilpaketen rechtfertigen die Verbesserungen nicht mehr die Schwierigkeiten und Kosten bei der Herstellung des Rotors. Hierbei hat sich insbesondere bei einer elektrisch zweipoligen Erregung des Rotors 20 eine Nutform mit einem im Wesentlichen glockenförmigen Querschnitt als vorteilhaft erwiesen, weil bei dieser Nutform die Bewicklung der Nuten mit einem hohen Füllfaktor besonders leicht und eine symmetrische Aufteilung der Wicklung beidseitig der Rotorwelle besonders einfach realisierbar ist. Zusammen mit dem spiegelbildlichen Aufbau des Rotorblechpaketes 21 erreicht man hierdurch weiterhin eine Minimierung der Unwucht im Betrieb der Maschine.

Im Ausführungsbeispiel besitzt der Rotor 20 zusätzlich zu der elektrischen Erregung sechs durch Permanentmagnete 24 und 25 erregte Pole, welche gleiche Polteilung τ3 wie die dazwischen liegenden, elektrisch erregten Folgepole 32 und 34 aufweisen. Stattdessen ist es jedoch auch möglich, am Rotorumfang vier oder acht Permanentmagnete 24, 25 in symmetrischer Anordnung vorzusehen. Weiterhin besteht bei geringerem Leistungsbedarf einer standardisierten Maschinenausführung die Möglichkeit, anstelle einzelner oder aller taschenförmigen Aussparungen 43 entsprechende Lücken ohne Permanentmagnetbestückung vorzusehen, um die Maschine bei geringerer Leistungsanforderung preiswerter fertigen zu können.

## Patentansprüche

1. Elektrische Maschine, insbesondere Generator zur Speisung des Bordnetzes eines Kraftfahrzeuges, mit einem geblechten Stator (16) mit einer mehrphasigen Statorwicklung (18) und mit einem geblechten Rotor (20) mit einer Erregerwicklung (29), welche in Nuten (40) angeordnet ist und vorzugsweise gemeinsam mit am Rotorumfang angeordneten Permanentmagneten (24,25) die Erregung der Maschine liefert, **dadurch gekennzeichnet, dass** das Rotorblechpaket (21) in Achsrichtung in wenigstens zwei Teilpakete (21a,b) mit zueinander fluchtend verlaufenden Nuten (40) und gegeneinander versetzten Polen (32-38) unterteilt ist, wobei die einer Nutöffnung (45) benachbarten, elektrisch erregten Pole (35,36; 37,38) jeweils unterschiedliche Polteilungen (τ1,τ2) aufweisen.

2. Elektrische Maschine nach Anspruch 1, **dadurch gekennzeichnet, dass** in den Teilpaketen (21a, 21b) des Rotorblechpaketes (21) am Rotorumfang abwechselnd elektrisch erregte Pole (32-38) und Aussparungen (43) für die Aufnahme von Permanentmagneten (24, 25) zur Bildung permanentmagnetisch erregter Pole angeordnet sind.

3. Elektrische Maschine nach einem der vorhergehenden Ansprüche, **dadurch gekennzeichnet, dass** die Polteilung (τ3) von permanentmagnetisch erregten Polen (24,25) und dazwischen angeordneter, elektrisch erregter Folgepole (32,34) gleich groß ist.

4. Elektrische Maschine nach einem der vorhergehenden Ansprüche, **dadurch gekennzeichnet, dass** die Polteilung (τ3) der permanentmagnetisch erregten Pole (24,25) und der elektrisch erregte Folgepole (32,34) im Bereich zwischen den Polteilungen (τ1, τ2) der unterschiedlich breiten, elektrisch erregten Pole (35-38) an den Nutöffnungen (45) liegt.

5. Elektrische Maschine nach einem der vorhergehenden Ansprüche, **dadurch gekennzeichnet, dass** die Differenz der Polteilungen (τ1-τ2) der elektrisch erregten Pole (35-38) an den Nutöffnungen (45) kleiner ist als der Abstand zwischen den Raststellungen des Rotors (20).

6. Elektrische Maschine nach einem der vorhergehenden Ansprüche, **dadurch gekennzeichnet, dass** das Rotorblechpaket (21) in Achsrichtung wenigstens zwei und höchstens sechs Teilpakete (21a,b) aufweist.

7. Elektrische Maschine nach einem der vorhergehenden Ansprüche, **dadurch gekennzeichnet, dass** die Nuten (40) des Rotors (20) im Wesentlichen glockenförmig gestaltet sind.

8. Elektrische Maschine nach einem der vorhergehenden Ansprüche, **dadurch gekennzeichnet, dass** der Rotor (20) elektrisch zweipolig erregt ist und zwei Nuten (40) aufweist, in denen eine aus zwei im Wesentlichen symmetrisch zur Rotorwelle (27) angeordneten Teilspulen (29a,b) bestehende Rotorwicklung (29) liegt.

9. Elektrische Maschine nach einem der vorhergehenden Ansprüche, **dadurch gekennzeichnet, dass** der Rotor (20) zusätzlich zur elektrischen Erregung vier, sechs oder acht, in Aussparungen (43) am Rotorumfang angeordnete Permanentmagnete (24, 25)aufweist.

## Claims

1. Electrical machine, in particular generator for supplying the vehicle electrical system of a motor vehicle, having a laminated stator (16) with a multi-phase stator winding (18) and having a laminated rotor (20) with an excitation winding (29) which is disposed in grooves (40) and which preferably supplies the excitation of the machine together with permanent magnets (24,25) disposed on the rotor circumference, **characterized in that** the rotor laminated package (21) is subdivided in the axial direction into at least two partial packages (21a, b) with mutually aligned grooves (40) and poles (32-38) offset with respect to one another, wherein the electrically excited poles (35, 36; 37, 38) adjacent to a groove opening (45) each have different pole pitches (τ1, τ2).

2. Electrical machine according to claim 1, **characterized in that** electrically excited poles (32-38) and recesses (43) for receiving permanent magnets (24, 25) for forming permanently magnetically excited poles are alternately disposed in the partial packages (21a, 21b) of the rotor laminated package (21) at the rotor circumference.

3. Electrical machine according to any one of the preceding claims, **characterized in that** the pole pitch (τ3) of permanently magnetically excited poles (24, 25) and electrically excited subsequent poles (32, 34) disposed therebetween is the same.

4. Electrical machine according to any one of the preceding claims, **characterized in that** the pole pitch (τ3) of the permanently magnetically excited poles (24, 25) and the electrically excited subsequent poles (32, 34) is located in the region between the pole pitches (τ1, τ2) of the differently wide electrically excited poles (35-38) at the groove openings (45).

5. Electrical machine according to any one of the preceding claims, **characterized in that** the difference between the pole pitches (τ1-τ2) of the electrically excited poles (35-38) at the groove openings (45) is smaller than the distance between the latching positions of the rotor (20).

6. Electrical machine according to any one of the preceding claims, **characterized in that** the rotor laminated package (21) comprises at least two and at most six partial packages (21a, b) in the axial direction.

7. Electrical machine according to any one of the preceding claims, **characterized in that** the grooves (40) of the rotor (20) are substantially bell-shaped.

8. Electrical machine according to any one of the preceding claims, **characterized in that** the rotor (20) is electrically excited with two poles and comprises two grooves (40) in which a rotor winding (29) consisting of two partial coils (29a, b) disposed substantially symmetrically with respect to the rotor shaft (27) is located.

9. Electrical machine according to any one of the preceding claims, **characterized in that**, in addition to the electrical excitation, the rotor (20) comprises four, six or eight permanent magnets (24, 25) disposed in recesses (43) on the rotor circumference.

## Revendications

1. Machine électrique, en particulier un générateur pour alimenter le réseau de bord d'un véhicule automobile, comportant un stator feuilleté (16) avec un enroulement de stator polyphasé (18) ainsi qu'un rotor feuilleté (20) avec un enroulement d'excitation (29) qui est agencé dans des rainures (40) et qui assure l'excitation de la machine, de préférence en association avec des aimants permanents (24, 25) disposés sur la circonférence du rotor, **caractérisée en ce que** l'empilage de tôles de rotor (21) est divisé, dans une direction axiale, en au moins deux empilages partiels (21a, 21b) avec des rainures (40) s'étendant de manière affleurante l'un par rapport à l'autre et des pôles (32 à 38) décalés les uns par rapport aux autres, dans laquelle les pôles (35, 36 ; 37, 38) excités électriquement et adjacents à une ouverture de rainure (45) ont respectivement différents pas polaires (τ1, τ2).

2. Machine électrique selon la revendication 1, **caractérisée en ce que** dans les empilages partiels (21a, 21b) de l'empilage de tôles de rotor (21) sont agencés des pôles (32 à 38) excités électriquement de manière alternée sur la circonférence du rotor ainsi que des évidements (43) pour la réception d'aimants permanents (24, 25) afin de former des pôles excités magnétiquement en permanence.

3. Machine électrique selon l'une des revendications précédentes, **caractérisée en ce que** les pas polaires (τ3) de pôles excités magnétiquement en permanence (24, 25) et de pôles suivants (32, 34) électriquement excités et intercalés entre ceux-ci sont de grandeur égale.

4. Machine électrique selon l'une des revendications précédentes, **caractérisée en ce que** le pas polaire (τ3) des pôles excités magnétiquement en permanence (24, 25) et des pôles suivants (32, 34) excités électriquement se situe dans la plage entre les pas polaires (τ1, τ2) des pôles excités électriquement (35 à 38) de différente largeur sur les ouvertures de rainure (45).

5. Machine électrique selon l'une des revendications précédentes, **caractérisée en ce que** la différence des pas polaires (τ1, τ2) des pôles excités électriquement (35, 38) sur les ouvertures de rainure (45) est inférieure à la distance entre les positions d'encliquetage du rotor (20).

6. Machine électrique selon l'une des revendications précédentes, **caractérisée en ce que** l'empilage de tôles de rotor (21) dans la direction axiale comporte au moins deux et au plus six empilages partiels (21a, 21b).

7. Machine électrique selon l'une des revendications précédentes, **caractérisée en ce que** les rainures (40) du rotor (20) sont configurées sensiblement en forme de cloche.

8. Machine électrique selon l'une des revendications précédentes, **caractérisée en ce que** le rotor (20) est excité de manière électriquement bipolaire et comporte deux rainures (40) dans lesquelles se trouve un enroulement de rotor (29) constitué de deux bobines partielles (29a, 29b) agencées de manière sensiblement symétrique à l'arbre de rotor (27).

9. Machine électrique selon l'une des revendications précédentes, **caractérisée en ce que** le rotor (20) comporte, en plus de l'excitation électrique, quatre, six ou huit aimants permanents (24, 25) agencées dans des évidements (43) sur la circonférence du rotor.
